# EUROPÄISCHE PATENTSCHRIFT

(11) **EP 2 227 388 B1**
(45) Veröffentlichungstag und Bekanntmachung des Hinweises auf die Patenterteilung: **20.04.2011**
(21) Anmeldenummer: 08856041.2
(22) Anmeldetag: 07.11.2008
(51) Int. Cl.: B32B 15/00, B32B 27/20, E04D 12/00

(54) **UNTERSPANNBAHN**
SARKING
BANDE DE REVÊTEMENT INFÉRIEURE

(30) Priorität: 03.12.2007 DE 102007058358
(43) Veröffentlichungstag der Anmeldung: 15.09.2010
(73) Patentinhaber: Monier Roofing Components GmbH, 61440 Oberursel (DE)
(72) Erfinder: DRECHSLER, Andreas, 64850 Schaafheim (DE); CEVALES, Martino, 60313 Frankfurt (DE)
(74) Vertreter: Schickedanz, Willi
(86) Internationale Anmeldenummer: PCT/EP2008/065183
(87) Internationale Veröffentlichungsnummer: WO 2009/071418

(56) Entgegenhaltungen:
- US-A1- 2006 040 091

## Beschreibung

Die Erfindung betrifft eine Unterspannbahn nach dem Oberbegriff des Patentanspruchs 1.

Eine Unterspannbahn ist ein flächiges Bauteil, das insbesondere bei Steildächern unterhalb einer wasserableitenden Dachdeckung angeordnet wird. Sie dient in erster Linie dazu, Flugschnee oder Regen, der vom Wind unter die Eindeckung geblasen wird, nach unten abzuleiten. In der Regel ist über der Unterspannbahn eine Konterlattung oder ein anderer Abstandhalter vorgesehen.

Neben dem mechanischen Abweisen von Schnee und Regen übernimmt die Unterspannbahn noch zusätzliche Funktionen. Die Unterspannbahn kann wasserdampfdiffusionsoffen ausgebildet sein, und über ihren Sd-Wert den Wasserdampftransport zwischen dem Dachinnenraum und der Umgebung regulieren. Eine weitere Zusatzfunktion besteht im Reflektieren von Wärme- bzw. Infrarotstrahlen. Hierdurch soll erreicht werden, dass sich der Dachraum im Sommer nicht zu sehr aufheizt und im Winter die Wärmeverluste reduziert werden.

Es ist bereits eine abschirmende Thermoreflexionsfolie für den Baubereich, speziell als Unterspannbahn, bekannt (EP 1 311 387 B1). Diese Thermoreflexionsfolie weist eine Basisfolie aus Polyethylen mit beidseitig aufgedampften Metallisierungsschichten auf. Über diesen Metallisierungsschichten ist ein Schutzlack aufgetragen. Durch den Schutzlack werden die Metallisierungsschichten vor Korrosion geschützt. Als Schutzlack wird ein Zweikomponentenlack auf der Basis von Polyurethan verwendet, das mit Isocyanat gehärtet wurde.

Weiterhin ist ein Verfahren zur Herstellung eines wasserdampfdurchlässigen, wasserdichten und wärmereflektierenden, flächigen Composites bekannt (EP 1 184 482 B1). Dieses Composite umfasst eine kontinuierliche Metallschicht und eine porenfreie, wasserdampfdurchlässige und wasserdichte hydrophile Kunststofffolie. Die Folie wird hierbei zunächst durch Plasmabehandlung in Sauerstoff oder in einem sauerstoffhaltigen Gas vorgereinigt. Sodann wird eine Metallschicht in einer Dicke von 10 bis 200 nm aufgebracht, auf die eine Schutzschicht auf Basis eines vernetzten Polyurethans aufgetragen wird.

Bekannt sind ferner ein Mattierungsmittel und/oder strukturgebende Zusätze enthaltende Pasten, enthaltend 5 bis 30 Gew.-% eines oder mehrerer (Meth)acrylcopolymere und/oder eines oder mehrerer Polyester, 15 bis 45 Gew.-% eines oder mehrerer Mattierungs- und/oder Strukturmittel sowie 30 bis 65 Gew.-% eines oder mehrerer organischer Lösungsmittel (DE 199 17 228 B4). Es können Netz- und Dispergiermittel, Rheologiemittel, Katalysatoren und gegebenenfalls weitere Additive und Hilfsstoffe zugegeben werden. Die (Meth)acrylharze und Polyesterharze können durch Zusatz üblicher Thixotropierungsmittel thixotropiert sein.

Ferner ist eine mit sichtbarem Licht aushärtbare Zusammensetzung bekannt, umfassend 2 bis 99 Gew.-% einer Verbindung, die Acrylat- und/oder Methacrylatgruppen und/oder Vinyl- und/oder Epoxid und/oder Oxetangruppen und/oder Acryl-Epoxy-Oligomergruppen und/oder eine Harzmasse auf der Basis von polymerisierbaren Polysiloxanen (DE 199 50 284 A1). Die Zusammensetzung weist ferner mindestens einen Initiator, mindestens einen Koinitiator sowie einen oder mehrere Modifikatoren, wie Füllstoffe, Farbstoffe, Pigmente, Fließverbesserer, Thixotropiemittel, polymere Verdicker, oxidierend wirkende Zusatzstoffe, Stabilisatoren und Verzögerer auf.

Des Weiteren ist eine zusammengesetzte, metallisierte Folie bekannt, die eine wasserdampfdurchlässige Schicht mit erster und zweiter Oberfläche aufweist, wobei diese Schicht wenigstens eine gewebte oder nicht-gewebte Struktur aufweist (US 2006/0040091 A1). Auf der ersten Oberfläche ist eine Metallschicht mit einer Dicke von ungefähr 15 bis 200 Nanometer aufgebracht, wobei wiederum auf dieser Metallschicht eine organische Beschichtung aufgebracht ist, die zur Gruppe der organischen Polymere, der organischen Oligomere oder einer Kombination von beiden gehört. Diese organische Beschichtung, welche die Funktion einer Schutzlackschicht hat, weist eine Dicke von 0,2 □m bis 2,5 □m auf. Es hat sich jedoch gezeigt, dass eine Schutzlackschicht mit einer derartigen Dicke bei Reflexionsschichten mit Gewebestruktur keinen dauerhaften Korrosionsschutz gewährleistet.

Der Erfindung liegt deshalb die Aufgabe zugrunde, eine wärmereflektierende, wasserdampfdiffusionsoffene Unterspannbahn zu schaffen, bei der ein dauerhafter Schutz der Reflexionsschicht gewährleistet ist und die dennoch eine gute Wasserdampfdurchlässigkeit aufweist.

Diese Aufgabe wird durch die Merkmale des Patentanspruchs 1 gelöst.

Die Erfindung betrifft somit eine Unterspannbahn, die eine IR-Licht reflektierende Schicht aufweist. Diese reflektierende Schicht, die eine Metallschicht ist, ist zur Vermeidung von Korrosionen mit einer Schutzschicht überzogen, die einen Kunststoff mit einem Zusatz von amorphem SiO₂ enthält.

Im einfachsten Fall ist die Unterspannbahn aus drei Schichten aufgebaut, nämlich aus zumindest einer wasserdampfdiffusionsoffenen Schicht, einer wärmereflektierenden Metallschicht und einer auf die Metallschicht aufgebrachten Schutzschicht. Dabei kann die wasserdampfdiffusionsoffene Schicht ein Spinnvlies, ein Gewebe oder ein Film aus organischem polymerem Material sein. Spinnvlies und Gewebe sind aufgrund ihrer Struktur wasserdampfdiffusionsoffen, während die Filme mikroperforiert oder mikroporös ausgebildet sein müssen, um wasserdampfdiffusionsoffen zu sein. Die wärmereflektierende Metallschicht wird vorzugsweise im Vakuum auf die wasserdampfdiffusionsoffene Schicht aufgedampft. Dabei entsteht auf der wasserdampfdiffusionsoffenen Schicht jedoch keine kontinuierliche Metallschicht, denn diese ist bei einem Spinnvlies aufgrund der relativ großen Poren und bei einem Film im Bereich der Mikroporen bzw. -löcher unterbrochen. Als Metall wird vorzugsweise reines Aluminium oder eine Aluminiumlegierung verwendet. Zur Vermeidung von Korrosionen wird die Metallschicht mit einer Schutzschicht überzogen, die einen Kunststoff mit einem Zusatz von amorphem SiO₂ enthält.

Ein herkömmlicher Schutzlack, der auf eine wasserdampfdiffusionsoffene Schicht aufgetragen wird, reduziert deren Wasserdampfdurchlässigkeit erheblich. Dieser Effekt wird bei der Erfindung erheblich verringert, indem der Schutzschicht amorphes SiO₂ zugesetzt wird. Die so modifizierte Schutzschicht schützt die Metallschicht dauerhaft gegen Korrosion und mechanischen Abrieb und sorgt dennoch dafür, dass die hohe Wasserdampfdurchlässigkeit der wasserdampfdiffusionsoffenen Schicht erhalten bleibt. Diese Effekte sind möglicherweise dadurch begründet, dass beispielsweise eine mit amorphem SiO₂ modifizierte Acrylatdispersion gegenüber einer reinen Acrylatdispersion eine erhöhte Fließfähigkeit besitzt. Wird beispielsweise die Metallschicht auf eine wasserdampfdiffusionsoffene Schicht mit Vliesstruktur aufgebracht und anschließend mit einer modifizierten Acrylatdispersion beschichtet, so fließt diese in die Poren des metallisierten Vlieses und benetzt die Filamente, d. h. die endlosen Chemiefasern. Eine reine Acrylatdispersion dringt aufgrund ihrer geringen Fließfähigkeit weniger gut in die Poren ein, und sie umschließt die Filamente auch nicht so gut. Vielmehr neigt die reine Acrylatdispersion eher dazu, die Poren zu verkleben, was die Wasserdampfdiffusion erschwert.

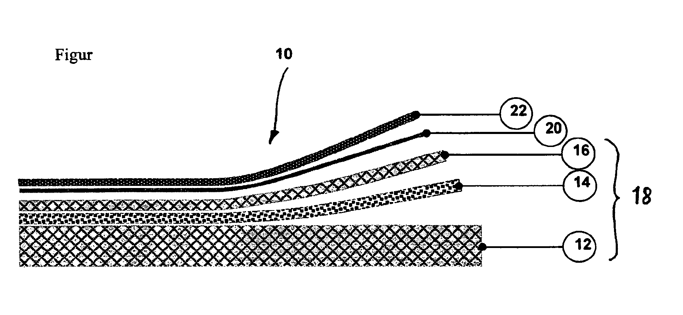

Ein Ausführungsbeispiel ist in der einzigen Figur dargestellt und wird im Folgenden näher beschrieben.

Die Figur zeigt eine erfindungsgemäße Unterspannbahn 10 mit mehrschichtigem Aufbau. Die Unterspannbahn 10 weist hierbei eine erste Spinnvlieslage 12 auf, die z. B. ein Flächengewicht von 120 g/m □besitzt und aus Polypropylen hergestellt ist. Auf der ersten Spinnvlieslage 12 befindet sich ein Film 14 aus Polypropylen, der mikroporös oder mikroperforiert ausgeführt sein kann. Dieser Film 14 ist aufgrund der Mikroperforation bzw. der Mikroporen wasserdampfdiffusionsoffen, aber zugluftdicht. Auf den Film 14, der z. B. aus Polypropylen mit einem Flächengewicht von 30 g/m besteht, ist eine zweite Spinnvlieslage 16 aufgebracht, welche z. B. aus Polypropylen hergestellt ist und ein Flächengewicht von 20 g/m □besitzt. Die beiden Spinnvlieslagen 12, 16 sind aufgrund ihrer Struktur wasserdiffusionsoffen ausgebildet. Aus der ersten Spinnvlieslage 12, dem Film 14 und der zweiten Spinnvlieslage 16 wird im Thermobondierungsverfahren ein Verbund 18 hergestellt. Auf die zweite Spinnvlieslage 16 des Verbundes 18 wird im Hochvakuum eine Metallschicht 20, vorzugsweise aus Aluminium aufgebracht, was durch Aufdampfen oder Sputtern geschehen kann. Auf die Metallschicht 20 ist als Korrosionsschutz eine Schutzschicht 22 aufgebracht, die amorphes SiO₂ enthält. Amorphes SiO₂ ist z. B. Quarzglas. Bei dem in der Figur beschriebenen Ausführungsbeispiel wird die mit der Metallschicht 20 versehene wasserdampfdiffusionsoffene Schicht von der zweiten Spinnvlieslage 16 gebildet. Alternativ kann die wasserdampfdiffusionsoffene Schicht durch den Film 14 gebildet werden. In diesem Fall wird die Schutzschicht 22 auf den Film 14 aufgetragen.

Der vorstehend beschriebene Verbund stellt nur eine Ausführungsform von mehreren denkbaren Ausführungsformen dar. Es sind auch einfachere Aufbauten denkbar, bei denen die einzelnen Schichten nicht thermobondiert, sondern miteinander verklebt sind. Einlagige Vliese sind diffusionsoffen, aber nicht winddicht. Ein zweilagiger Verbund aus mikroporöser Folie und Vlies ist dagegen winddicht und diffusionsoffen. Allerdings ist eine mikroporöse Schicht in der Regel nicht gegen UV-Licht und mechanische Belastung versiegelt. Ein dreilagiger Aufbau hat dagegen gute Werte bei der UV-Beständigkeit, ist mechanisch robust und überdies winddicht. Jede der Lagen kann unterschiedliche Gewichte haben.

Zum Nachweis der beschriebenen Effekte wurden Vergleichsversuche durchgeführt, deren Ergebnisse in der nachfolgenden Tabelle wiedergegeben sind (PP = Polypropylen).

| **Versuche** | **Verbund** | **Sehutztack** | **Sehutztack SiO2-Gehalt** | **Gewicht der Schicht** | **Korrostons-Schutz** | **Sd-Wert** | **Eignung Korrosionsschutz und Sd-Wert** |
|---|---|---|---|---|---|---|---|
| | | | % | g/m² | | m | |
| I | 120g/m² PP Spinnvlies 28g/m² PP Mikroporöses 20g/m² PP Spinnvlies | - | - | - | - | 0,04 | - |
| | | | | | | | |
| II | 120/m² PP Spinnvlies 28g/m² PP Mikroporöses 20g/m² PP Spinnvlies 35nm Al | Acrylat | 0 | 8.6 | Versagt | 0,10 | Nicht Gut wegen |
| III | | | 0 | 11,2 | Gut | 0,15 | Korrosion Nicht Gut wegen Sd-Wert |
| IV | | | 0 | 13,3 | Gut | 0,15 | Nicht Gut wegen Sd-Wert |
| | | | | | | | |
| V | | Acrylat mit amorphem SiO₂ | 45% | 8 | Gut | 0,06 | Gut |
| VI | | | 45% | 10 | Sehr Gut | 0,07 | Sehr Gut |
| VII | | | 60% | 11.2 | Sehr Gut | 0,05 | Sehr Gut |

Bei den Vergleichsversuchen wurde die Korrosionsbeständigkeit getestet und der die Wasserdampfdurchlässigkeit beschreibende Sd-Wert ermittelt. Um eine Korrosion zu bewirken, wurden die Proben 15 Minuten über kochendes Wasser gehalten. Hierdurch werden Korrosionsergebnisse erzielt, wie sie sich normalerweise binnen drei Monaten bei einer relativen Luftfeuchtigkeit von 100 % und 60 °C ergeben. Das Ausmaß der Korrosion wurde anschließend optisch begutachtet und beurteilt. Die Messung des Sd-Wertes erfolgte gemäß EN-DIN 12572.

Wie aus der vorstehenden Tabelle ersichtlich, zeigt der Versuch I die Dampfdurchlässigkeit des Verbundes 18, der aus der ersten Spinnvlieslage 12 (120 g/m² Polypropylen), dem Film 14 (28 g/m² mikroporöser Film aus Polypropylen) und der zweiten Spinnvlieslage 16 (20 g/m² Polypropylen) besteht. Da durch diesen Verbund 18 die Wasserdampfdurchlässigkeit der Unterspannbahn 10 definiert wird, wurde im Versuch 1 ohne Aufbringung der Metallschicht 20 und der Schutzschicht 22 eine Referenzmessung des Sd-Wertes vorgenommen. Der Sd-Wert für diese drei Schichten 12, 14, 16 beträgt 4 cm.

Bei den Versuchen II bis VII wurde die Unterspannbahn 10 gemäß Versuch I zusätzlich mit einer Metallsschicht 20 ausgestattet, die aus einer 35 nm dicken Aluminiumschicht bestand und jeweils mit unterschiedlichen Schutzschichten 22 überzogen wurde. Bei den Versuchen II bis IV wurde auf die Unterspannbahn 10 als Schutzschicht 22 eine reine Acrylatdispersion aufgetragen. Bei den Versuchen V bis VII hingegen bestand die Schutzschicht 22 aus einer Acrylatdispersion, die bei den Versuchen V und VI mit 45 % und bei Versuch VII mit 60 % SiO₂ vermischt war. Die prozentualen Angaben hinsichtlich des Zusatzes an amorphem SiO₂ beziehen sich dabei auf das Gewicht der getrockneten Schutzschicht 22. Bei den Versuchen hat sich gezeigt, dass die Unterspannbahnen 10 mit einem mit amorphem SiO₂ modifizierten Schutzlack 22 hinsichtlich des Korrosionsschutzes und des Sd-Wertes die besten Eigenschaften hatten.

Hinsichtlich der Grenzen der Zugabe von amorphem SiO₂ ist Folgendes zu beachten. Durch eine geringe Zugabe von amorphem SiO₂ nähern sich die Eigenschaften der Schutzschicht 22 denjenigen einer reinen Acrylatdispersion an. Um einen nennenswerten Effekt zu erzielen, ist eine Zugabe von wenigstens 10 % SiO₂ notwendig. Oberhalb von 60 % wird es zunehmend schwieriger, eine klare filmartige Schutzschicht 22 auf der Metallschicht 20 zu erhalten, was zu einer rapiden Verringerung des Reflexionsvermögens der Unterspannbahn 10 führt. Dem Zusatz an amorphem SiO₂ ist praktisch da eine obere Grenze gesetzt, wo das Reflexionsvermögen den für eine wärmereflektierende Unterspannbahn erforderlichen Mindestwert unterschreitet. Der Mindestwert für das Reflexionsvermögen der Unterspannbahn 10 liegt üblicherweise bei 50 %.

### Beispiel 1:

Zunächst wurde ein dreilagiger Verbund 18 aus einer ersten PolypropylenSpinnvlieslage 12 mit einem Gewicht von 120 g/mQ einem mikroporösen Polypropylenfilm 14 mit einem Gewicht von 30 g/m □und einer zweiten Polypropylen-Spinnvlieslage 16 mit einem Flächengewicht von 20 g/m² durch Thermobondierung hergestellt. Auf die diffusionsoffene zweite Polypropylen-Spinnvlieslage 16 des Verbunds 18 wurde im Hochvakuum eine Metallschicht 20 aus Aluminium aufgedampft, die eine Stärke von 35 bis 50 nm aufwies.

Anschließend wurde die mit der Metallschicht 20 versehene Oberseite der zweiten Polypropylen-Spinnvlieslage 16 mit 12 g eines die Schutzschicht 22 bildenden Lackes beschichtet (5 g Feststoff), der aus 70 Gewichtsteilen einer wässerigen Rein-Acrylatdispersion (48 % Feststoffgehalt, Tg = 15 °C) und 30 Gewichtsteilen eines wässerigen Kieselsols (30 % Feststoff, 300 m □g Oberfläche) bestand. Die Beschichtung wurde durch Airless-Sprühen aufgetragen und in einem Durchlauftrockner getrocknet. Der getrocknete Lack der Schutzschicht 22 wies einen Anteil von 21 % amorphem SiO₂ auf.

### Beispiel 2:

Zunächst wurde ein dreilagiger Verbund 18 aus einer ersten Polypropylen-Spinnvlieslage 12 mit einem Gewicht von 120 g/m □ einem mikroperforierten Polypropylenfilm 14 mit einem Gewicht von 30 g/m □und einer zweiten Polypropylen-Spinnvlieslage 16 mit einem Flächengewicht von 20 g/m² durch Thermobondierung hergestellt. Auf die diffusionsoffene zweite Polypropylen-Spinnvlieslage 16 des Verbunds 18 wurde im Hochvakuum eine Metallschicht 20 aus Aluminium aufgedampft, die eine Stärke von 60 nm aufweist.

Anschließend wurde die mit der Metallschicht 20 versehene Oberseite der zweiten Polypropylen-Spinnvlieslage 16 mit 27 g eines die Schutzschicht 22 bildenden Lackes beschichtet (10 g Feststoff), der aus 40 Gewichtsteilen einer wässerigen Rein-Acrylatdispersion (48 % Feststoffgehalt, Tg = 15 °C) und 60 Gewichtsteilen eines wässerigen Kieselsols (30 % Feststoff, 300 m □g Oberfläche) bestand. Die Schutzschicht 22 wurde durch einen Kalander, d. h. eine Walzmaschine mit übereinander angeordneten, gegenläufigen Walzen, aufgetragen und in einem Durchlauftrockner getrocknet. Der getrocknete Lack der Schutzschicht 22 wies einen Anteil von 48 % amorphem SiO₂ auf. Die Partikelgrößen des amorphen SiO₂ können hierbei 1000 nm ausmachen.

Die vorstehend erwähnten Materialien sind nur Beispiele. Die Schichten 12, 14, 16 bestehen ausschließlich aus Polypropylen, weil hierdurch die Thermobondierung einfach durchzuführen ist. Auch der beschriebene Prozess, bei dem ein vorgefertigter Verbund metallisiert und beschichtet wurde, ist nur beispielhaft. Man könnte auch zuerst die Außenschicht des Verbunds metallisieren, dann mit der anderen Lage verbinden und zuletzt beschichten. Es wäre auch möglich, die äußere Schicht zuerst zu metallisieren und zu lackieren und erst hierauf mit den anderen Lagen zu verbinden.

Metallschichten sind in der Regel nicht diffusionsoffen. Bei der Erfindung wird jedoch ein nicht geschlossenes Gewebe bedampft, das keine geschlossene Oberfläche aufweist. Weil die unter dem Gewebe liegende Folie nicht bedampft wird, bleiben kleine Löcher in der Metallfolie. Es ist auch möglich, nach dem Bedampfen mit Metall die Folie mit Löchern zu versehen. Statt des erwähnten Acrylharzes könnten auch Polymere aus Polyurethan als Bindemittel verwendet werden.

Die erwähnten Sd-Werte sind für Materialien Sd > 0,2 m in EN ISO 1931 und in EN ISO 12572 für Materialien mit Sd < 0,2 m angegeben. Auch in DIN 4802-3 finden sich Hinweise auf Sd-Werte.

Diese Werte wurden wegen des Effekts festgesetzt, dass von der in der Regel höheren Raumtemperatur zur niedrigeren Außentemperatur ein Dampfdruckgefälle entsteht, das sich durch Diffusion auszugleichen sucht. Diese natürliche Diffusion wird durch Beschichtungen oder Sperrfolien verlangsamt. Der Widerstand gegen diesen Ausgleich wird durch die Wasserdampf-Diffusionsstromdichte oder den Sd-Wert beschrieben. Der Sd-Wert bzw. die diffusionsäquivalente Luftschichtdicke gibt an, wie lange Wasserdampf für seine Wanderung durch ein luftdichtes Bauteil braucht. Beträgt der Wert beispielsweise 3 m, zeigt dies an, dass der Wasserdampf bei der Konvektion durch die luftdichte Ebene genau so lange braucht wie für die Durchwanderung einer 3 m dicken Luftschicht. Der Widerstand des Bauteils gegenüber dem Wasserdampf ist also genauso groß wie bei einer 3 m dicken Luftschicht.

## Patentansprüche

1. Unterspannbahn (10) mit zumindest einer wasserdampfdiffusionsoffenen Schicht (12, 14, 16), einer Metallschicht (20) auf der wasserdampfdiffusionsoffenen Schicht (16) und einer Schutzschicht (22) auf der Metallschicht (20), **dadurch gekennzeichnet, dass** die Schutzschicht (22) amorphes SiO₂ enthält.

2. Unterspannbahn nach Anspruch 1, **dadurch gekennzeichnet, dass** die Schutzschicht (22) Acrylatpolymere enthält.

3. Unterspannbahn nach Anspruch 1 oder Anspruch 2, **dadurch gekennzeichnet, dass** das amorphe SiO₂ einen Anteil von 10 % bis 50 % des Gewichts der getrockneten Schutzschicht (22) hat.

4. Unterspannbahn nach einem oder mehreren der vorstehenden Ansprüche, **dadurch gekennzeichnet, dass** die Partikelgrößen des amorphen SiO₂ kleiner als 1000 nm sind.

5. Unterspannbahn nach Anspruch 1 oder Anspruch 2, **dadurch gekennzeichnet, dass** der Anteil an amorphem SiO₂ maximal 60 % des Gewichts der getrockneten Schutzschicht (22) beträgt.

6. Unterspannbahn nach Anspruch 1, **dadurch gekennzeichnet, dass** die Schutzschicht (22) Reinacrylat enthält.

7. Unterspannbahn nach Anspruch 1, **dadurch gekennzeichnet, dass** die Schutzschicht (22) ein Flächengewicht von 5 bis 20 g/m² hat.

8. Unterspannbahn nach Anspruch 1, **dadurch gekennzeichnet, dass** die Dicke der Schutzschicht (22) zwischen 5000 und 15000 nm beträgt.

9. Unterspannbahn nach Anspruch 1, **dadurch gekennzeichnet, dass** die wasserdampfdiffusionsoffene Schicht eine Spinnvlieslage (12, 16) und / oder ein Film (14) ist.

10. Unterspannbahn nach Anspruch 9, **dadurch gekennzeichnet, dass** auf der Spinnvlieslage (12) ein Film (14) vorgesehen ist.

11. Unterspannbahn nach Anspruch 10, **dadurch gekennzeichnet, dass** auf dem Film (14) eine zweite Spinnvlieslage (16) vorgesehen ist.

12. Unterspannbahn nach Anspruch 11, **dadurch gekennzeichnet, dass** auf der zweiten Spinnvlieslage (16) eine Metallschicht (20) vorgesehen ist.

13. Unterspannbahn nach Anspruch 10, **dadurch gekennzeichnet, dass** auf dem Film (14) eine Metallschicht (20) vorgesehen ist.

14. Unterspannbahn nach Anspruch 9, **dadurch gekennzeichnet, dass** der Film (14) mikroperforiert oder mikroporös ausgebildet ist.

## Claims

1. Underlayment (10) with at least one layer (12, 14, 16) permitting water vapor diffusion, a metal layer (20) on the water vapor diffusion layer (16) and a protective layer (22) on the metal layer (20), **characterized in that** the protective layer (22) comprises amorphous SiO₂.

2. Underlayment as claimed in claim 1, **characterized in that** the protective layer (22) comprises acrylate polymers.

3. Underlayment as claimed in claim 1 or claim 2, **characterized in that** the amorphous SiO₂ has a fraction of 10% to 50% of the weight of the dried protective layer (22).

4. Underlayment as claimed in one or more of the preceding claims, **characterized in that** the particle sizes of the amorphous SiO₂ are smaller than 1000 nm.

5. Underlayment as claimed in claim 1 or claim 2, **characterized in that** the fraction of amorphous SiO₂ is maximally 60% of the weight of the dried protective layer (22).

6. Underlayment as claimed in claim 1, **characterized in that** the protective layer (22) comprises pure acrylate.

7. Underlayment as claimed in claim 1, **characterized in that** the protective layer (22) has a mass per unit area of 5 to 20 g/m².

8. Underlayment as claimed in claim 1, **characterized in that** the thickness of the protective layer (22) is between 5000 and 15000 nm.

9. Underlayment as claimed in claim 1, **characterized in that** the water vapor diffusion layer is a spunbonded fabric layer (12, 16) and/or a film (14).

10. Underlayment as claimed in claim 9, **characterized in that** on the spunbonded fabric layer (12) a film (14) is provided.

11. Underlayment as claimed in claim 10, **characterized in that** on the film (14) a second spunbonded fabric layer (16) is provided.

12. Underlayment as claimed in claim 11, **characterized in that** on the second spunbonded fabric layer (16) a metal layer (20) is provided.

13. Underlayment as claimed in claim 10, **characterized in that** on the film (14) a metal layer (20) is provided.

14. Underlayment as claimed in claim 9, **characterized in that** the film (14) is implemented such that it is microperforated or microporous.

## Revendications

1. Bande de revêtement inférieure (10) avec au moins une couche ouverte à la diffusion de vapeur d'eau (12, 14, 16), une couche métallique (20) située sur la couche ouverte à la diffusion de vapeur d'eau (16) et une couche protectrice (22) située sur la couche métallique (20), **caractérisée en ce que** la couche protectrice (22) contient du SiO₂ amorphe.

2. Bande de revêtement inférieure selon la revendication 1, **caractérisée en ce que** la couche protectrice (22) contient des polymères d'acrylate.

3. Bande de revêtement inférieure selon la revendication 1 ou la revendication 2, **caractérisée en ce que** le SiO₂ amorphe représente 10 % à 50 % du poids de la couche protectrice (22) une fois séchée.

4. Bande de revêtement inférieure selon l'une des revendications précédentes, **caractérisée en ce que** les particules du SiO₂ amorphe présentent des grosseurs inférieures à 1000 nm.

5. Bande de revêtement inférieure selon la revendication 1 ou la revendication 2, **caractérisée en ce que** la teneur du SiO₂ amorphe représente au maximum 60 % du poids de la couche protectrice (22) une fois séchée.

6. Bande de revêtement inférieure selon la revendication 1, **caractérisée en ce que** la couche protectrice (22) contient de l'acrylate pur.

7. Bande de revêtement inférieure selon la revendication 1, **caractérisée en ce que** la couche protectrice (22) a une masse surfacique de 5 à 20 g/m².

8. Bande de revêtement inférieure selon la revendication 1, **caractérisée en ce que** l'épaisseur de la couche protectrice (22) est comprise entre 5000 et 15000 nm.

9. Bande de revêtement inférieure selon la revendication 1, **caractérisée en ce que** la couche ouverte à la diffusion de vapeur d'eau est une couche de non-tissé par voie fondue (12, 16) et/ou un film (14).

10. Bande de revêtement inférieure selon la revendication 9, **caractérisée en ce qu'**un film (14) est prévu sur la couche de non-tissé par voie fondue (12).

11. Bande de revêtement inférieure selon la revendication 10, **caractérisée en ce qu'**une deuxième couche de non-tissé par voie fondue (16) est prévue sur le film (14).

12. Bande de revêtement inférieure selon la revendication 11, **caractérisée en ce qu'**une couche métallique (20) est prévue sur la deuxième couche de non-tissé par voie fondue (16).

13. Bande de revêtement inférieure selon la revendication 10, **caractérisée en ce qu'**une couche métallique (20) est prévue sur le film (14).

14. Bande de revêtement inférieure selon la revendication 9, **caractérisée en ce que** le film (14) est microperforé ou microporeux.
